# DEMANDE DE BREVET EUROPEEN

(11) **EP 3 312 583 A1**
(43) Date de publication de la demande: **25.04.2018**
(21) Numéro de dépôt: 17194573.6
(22) Date de dépôt: 03.10.2017
(51) Int. Cl.: G01M 13/04, B64C 25/36, B64C 25/40, B64D 45/00

(54) **PROCEDE D'ESTIMATION DE L'ENDOMMAGEMENT SUBI PAR DES PARTIES DE TRAINS D'ATTERRISSAGE D'AERONEF**

(30) Priorité: 24.10.2016 FR 1660306
(71) Demandeur: Safran Landing Systems, 78140 Vélizy-Villacoublay (FR)
(72) Inventeur: GIRAUD, Frédérik, 78140 VELIZY-VILLACOUBLAY (FR)
(74) Mandataire: Lavialle, Bruno François Stéphane

(57) **Abrégé**

Procédé pour estimer l'endommagement d' actionneurs d'entraînement en rotation des roues portées par des atterrisseurs d'aéronef, le procédé comportant selon l'invention les étapes de :
- En service, enregistrer des données relatives aux actionneurs d'entraînement, notamment des données de couple développé par les actionneurs d'entraînement, de vitesse de rotation des moteurs des actionneurs d'entraînement, de nombre de tours des moteurs ;
- En déduire un dommage subi par les actionneurs d'entraînement ;
- Estimer une durée de vie résiduelle des actionneurs d'entraînement.

## Description

L'invention concerne un procédé pour estimer l'endommagement subi par des parties de trains d'atterrissage d'un aéronef.

### ARRIERE PLAN DE L'INVENTION

On connaît des aéronefs dont les atterrisseurs sont munis d'actionneurs d'entraînement en rotation des roues pour permettre le déplacement de l'aéronef sans utiliser les groupes propulseurs de l'aéronef. Les atterrisseurs sont dimensionnés pour résister à diverses sollicitations de fatigue, notamment des efforts d'atterrissage, de virage, de freinage, et mais également d'entraînement des roues. Pour cette dernière partie du spectre de fatigue, il est connu que les couples appliqués lors de l'entraînement des roues sont à l'origine de la majeure partie de l'endommagement de ces actionneurs, mais également d'une partie de l'atterrisseur en interaction directe avec des actionneurs.

### OBJET DE L'INVENTION

L'invention vise à proposer un procédé pour estimer l'endommagement subi par des parties de train d'atterrissage d'un aéronef, notamment les actionneurs d'entraînement des roues.

### PRESENTATION DE L'INVENTION

En vue de la réalisation de ce but, on propose un procédé pour estimer l'endommagement d'actionneurs d'entraînement en rotation des roues portées par des atterrisseurs composant le train d'atterrissage, le procédé comportant selon l'invention les étapes de :
- En service, enregistrer des données relatives aux actionneurs d'entraînement, notamment des données de couple développé par les actionneurs d'entraînement, de vitesse de rotation des moteurs des actionneurs d'entraînement, de nombre de tours des moteurs ;
- En déduire un dommage subi par les actionneurs d'entraînement ;
- Estimer une durée de vie résiduelle des actionneurs d'entraînement.

Le procédé de l'invention peut être mis en oeuvre en temps réel par l'un des calculateurs de l'aéronef, ou de façon décalée. Les données sont alors enregistrées à bord de l'aéronef puis transmises à un calculateur externe pour estimer l'endommagement des actionneurs d'entraînement et de l'atterrisseur et en déduire une durée de vie résiduelle des actionneurs.

De préférence, les données proviennent directement du module de commande des actionneurs d'entraînement. Le cas échéant, on pourra compléter les données enregistrées par des données provenant d'autres sources que le module de contrôle des actionneurs d'entraînement, comme des accéléromètres portés par l'atterrisseur.

Au-delà du suivi en temps réel des actionneurs d'entraînement, la connaissance des spectres de sollicitation subis par les actionneurs d'entraînement permet de déterminer des intervalles d'inspection, de simplifier la certification de ces actionneurs en constituant une base de données représentative, et de remonter éventuellement à la source d'un problème en service touchant les actionneurs d'entraînement.

Il va de soi que la connaissance du spectre de sollicitation permet également de suivre l'endommagement des parties de l'atterrisseur portant les actionneurs d'entraînement ou subissant les effets de leur action.

## Revendications

1. Procédé pour estimer l'endommagement de partie d'un train d'atterrissage d'aéronef, notamment des actionneurs d'entraînement en rotation des roues portées par des atterrisseurs composant le train d'atterrissage, le procédé comportant selon l'invention les étapes de :
- En service, enregistrer des données relatives aux actionneurs d'entraînement, notamment des données de couple développé par les actionneurs d'entraînement, de vitesse de rotation des moteurs des actionneurs d'entraînement, de nombre de tours des moteurs ;
- En déduire un dommage subi par les actionneurs d'entraînement ;
- Estimer une durée de vie résiduelle des actionneurs d'entraînement.

2. Procédé selon la revendication 1, dans lequel les données enregistrées proviennent d'un module de commande des actionneurs d'entraînement.

3. Procédé selon la revendication 1, dans lequel on enregistre également d'autres données provenant d'autres sources que le module de commande des actionneurs d'entraînement, comme des accéléromètres.
